## Europäisches Patentamt
## European Patent Office
## Office européen des brevets

(19)

(11) Publication number: **0 016 278**
**B1**

(12)

# EUROPEAN PATENT SPECIFICATION

(45) Date of publication of patent specification: **29.12.82**

(51) Int. Cl.³: **A 01 N 25/26**

(21) Application number: **79301795.5**

(22) Date of filing: **31.08.79**

(54) **Acrylic coated granular pesticidal compositions and method for controlling the rate of toxicant release of a phosphorus pesticide-containing composition.**

| | |
|---|---|
| (30) Priority: **06.02.79 US 9883** | (73) Proprietor: **AMERICAN CYANAMID COMPANY**<br>**Berdan Avenue**<br>**Wayne New Jersey 06904 (US)** |
| (43) Date of publication of application:<br>**01.10.80 Bulletin 80/20** | (72) Inventor: **Pasarela, Nunzio Robert**<br>**502 Milltown Road**<br>**Somerset County Bridgewater, New Jersey (US)** |
| (45) Publication of the grant of the patent:<br>**29.12.82 Bulletin 82/52** | |
| (84) Designated Contracting States:<br>**BE CH FR GB IT NL** | (74) Representative: **Allam, Peter Clerk et al,**<br>**LLOYD WISE, TREGEAR & CO. Norman House**<br>**105-109 Strand**<br>**London WC2R 0AE (GB)** |
| (56) References cited:<br>**FR - A - 2 331 961**<br>**US - A - 3 151 969**<br>**US - A - 3 366 539**<br>**US - A - 4 059 700** | |
| **The file contains technical information submitted after the application was filed and not included in this specification** | |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Acrylic coated granular pesticidal compositions and method for controlling the rate of toxicant release of a phosphorus pesticide-containing composition

It is known that a number of phosphorus pesticidal compounds, such as 2 - (diethoxyphosphinylimino) - 1,3 - dithiolane, 2 - (diethoxyphosphinylimino) - 4 - methyl - 1,3 - dithiolane, 2 - (diethoxyphosphinylimino) - 1,3 - dithietane, O,O - diethyl S - (ethylthiomethyl)-phosphorodithioate and O,O - diethyl S - {[(1,1 - dimethylethyl)thio]methyl}phosphorodithioate, are highly effective for the control of a broad spectrum of insects and/or nematodes which attack and destroy agriculturally important food and fodder crops. It is, therefore, of advantage to utilize such compounds in various compositions useful in agriculture. Unfortunately, these otherwise highly effective pesticides are extremely toxic when introduced into the human circulatory system as by ingestion inhalation, or dermal absorption.

Thus, the use of compositions containing the above referred-to compounds for the control of insect pests represents a distinct hazard to individuals engaged in the use and application thereof. Similar hazards are encountered by those who are engaged in storing, transporting and distributing to the ultimate user such compositions.

Practical use aspects of the above referred-to pesticide compounds for intended pest control often dictate the use of various granular carrier compositions in which the pesticidal compound is adsorbed or absorbed onto or into the carrier composition. These granular compositions not only provide a more dilute composition of the active pesticide for appropriate applications in agronomic uses but also serve to reduce the potential hazard in use of the pesticide through dermal absorption. Even though such formulated compositions tend to reduce the potential hazard of dermal absorption of the above referred-to pesticides, it is highly desirable to reduce the potential hazard even more.

It is known from Ullman's "Encyclopädie der Technischen Chemie", Verlag Chemie, 1978, Vol. 16, pages 681—682, that microencapsulation of fertilizers and insecticides with permeable casings can control the rate of release of the active substance and, in the case of insecticides, can reduce the toxicity of the material. It is reported that such insecticides as methylparathion, diazinon and ethyl-parathion can be encapsulated with a polyamide.

It is the object of the present invention to provide a granular formulation composition containing a phosphorus pesticide which exhibits reduced mammalian dermal toxicity, while retaining its pesticidal effectiveness, and which may be prepared in a straight-forward manner without resorting to microencapsulation techniques.

To these ends, it has been found that, when solid granular compositions containing phosphorus pesticides are treated, as by spraying for instance, with certain acrylic latices, or with solutions of certain acrylic polymers in organic solvents, the resultant acrylic polymer coated compositions possess advantageously a two to three fold margin of safety due to their lowered mammalian dermal toxicity as compared to similar, uncoated compositions, while their pesticidal activity and physical integrity remains unchanged. These effects may be accomplished in a straightforward manner by applying certain acrylic latex compositions or solutions of certain polymers in an organic solvent to the surfaces of said impregnated pesticidal granules.

More specifically, the invention in one aspect is a solid particulate composition comprising particles of an inert sorptive or non-sorptive carrier impregnated or coated with a phosphorus pesticide characterized in that the pesticide-impregnated or -coated carrier is coated with an acrylic polymer selected from the group consisting of a (1) hard, thermoplastic acrylic polymer having an intrinsic viscosity of from 0.75 dl/g to 3.1 dl/g at 30°C in tetrahydrofuran, (2) hard, self-crosslinking thermoplastic acrylic polymers having an intrinsic viscosity of from 1.0 dl/g to 2.0 dl/g at 30°C in dimethylformamide (3) acrylic polymers having an intrinsic viscosity of from 0.05 dl/g to 0.1 dl/g at 30°C in butanol. Optionally, the pesticide-impregnated or -coated carrier may also be coated and/or blended with a finely divided sorptive substrate.

The invention also provides a method for controlling the rate of toxicant release of a phosphorus pesticide-containing particulate composition; comprising applying to said composition, in amounts ranging from, 0.5% to 5%, by weight, of the total composition, an acrylic polymer selected from the group consisting of (1) hard thermoplastic acrylic polymers having an intrinsic viscosity of from 0.75 dl/g to 3.0 dl/g at 30°C in tetrahydrofuran, (2) hard self-crosslinking thermoplastic acrylic polymers having an intrinsic viscosity of from 1.0 dl/g to 2.0 dl/g at 30°C in dimethylformamide, and (3) acrylic polymers having an intrinsic viscosity of from 0.05 dl/g to 0.1 dl/g at 30°C in butanol; wherein said solid particulate composition comprises particles of an inert, coarse or finely divided, sorptive or non-sorptive carrier impregnated or coated with said phosphorus pesticide.

According to the process of the invention, in preferred embodiments, the compositions of the granular formulation, prior to acrylic polymer coating, are prepared by impregnating a toxicant ranging from about 2% to about 25%, by weight, and, preferably, from 2.5% to 20% by weight, said toxicant being 2 - (diethoxyphosphinylimino) - 1,3 - dithiolane, 2 - (diethoxyphosphinylimino) - 4 - methyl - 1,3 - dithiolane 2 - (diethoxyphosphinylimino) - 1,3 - dithietane, O,O - diethyl - S - (ethylthiomethyl) - phosphorodithioate, O,O - diethyl S - {[(1,1 - dimethylethyl)thio]methyl}-phosphorodithioate, and equivalents thereof, with a suitable granular carrier. Illustrative of the latter carrier is either (a) a sorptive material, such as attapulgite or montmorillonite (clays), brick chips, pumice, talc, volcanic cinders, corncob grits, or (b) a non-sorptive material, such as sand or limestone chips. If a sorptive material is selected, a deactivator such as ethylene glycol, di-, tri- or tetraethylene glycol and mixtures thereof can be added to neutralize intrinsic acidity in amounts ranging from about 3% to about 6%, by weight, of said compositions. In this event, the amount of granular carrier is decreased by an amount equal to that of the deactivator added to said composition. Advantageously, the present granular composition may also be blended and/or coated with from about 0.5%, by weight, to about 2%, by weight of composition of a finely divided sorptive substrate, such as calcined powdered clays, diatomaceous earth, calcium silicate, fumed silica, and fumed silica which has been made hydrophobic by the replacement of most of the hydrophilic hydroxyl group, which normally populate the silica surface, with trimethylsiloxyl groups as well as mixtures of said substrates. It has been found that the addition of said sorptive substrate to the granular formulations aids in maintaining the free-flow-formation of agglomerates in same, particularly subsequent to treatment with a sprayed acrylic polymer, defined hereinbelow with particularity.

It is a good practice to coat impregnated granular formulations, hereinabove set forth, by any suitable means, such as by spraying with an acrylic latex. The coating is accomplished by spraying either an aqueous emulsion of an acrylic polymer or a solution of an appropriate acrylic polymer in amounts sufficient to provide an acrylic polymer coating of from about 0.5% to about 5%, by weight, and more preferably, from about 1.5% to about 4%, by weight, of the overall granular formulation. Exemplary of the above mentioned acrylic latices are (a) thermoplastic acrylic emulsion polymers with a solids content of from about 38% to about 43% by weight, and having an intrinsic viscosity range of from 0.75 to 3.1 dl/g at 30°C. in THF (tetrahydrofuran), (b) crosslinking acrylic emulsion polymers with a solids content of about 45—46%, by weight, and having an intrinsic viscosity range of from 1.0 to 2.0 and, preferably, about 1.4 dl/g at 30°C. in DMF (dimethylformamide), and (c) solutions of acrylic polymers in tetrahydrofurfuryl alcohol, wherein said acrylic polymers have an intrinsic viscosity range of from about 0.05 to 0.1 dl/g and, preferably, about .085 dl/g at 30°C. in butanol.

It is an advantage in carrying out the process of the invention to prepare the coated granular compositions in a straightforward manner involving a plurality of steps. For instance, from about 2% to about 30% by weight, and preferably from about 2.5% to about 20% by weight, of formulation of a toxicant selected from the above identified group, for instance, O,O - diethyl S - {[(1,1 - dimethylethyl)thio]methyl}phosphorodithioate, is mixed with from about 3% to about 6%, by weight, of formulation of a deactivator selected from the group consisting of ethylene glycol, di-, tri- or tetraethylene glycol and mixtures thereof. The weight percent of the overall mixture is based on the weight of the carrier. This mixture is then sprayed on a granular carrier selected from the group consisting of clays, such as attapulgite and montmorillonite clays, brick chips, pumice, talc, volcanic cinders, corncob grits, sand and limestone chips, wherein said carrier is used in amounts from about 62%, by weight, to about 94% and, preferably, from about 68% to about 92%, by weight of formulation. After the spraying has been completed, agitation of the mixture is continued until all of the liquid is absorbed. Thereafter, if so desired, from about 0.5% to about 2%, by weight, of a finely divided sorptive substrate is added and agitation of the mixture continued until a uniform blend is obtained. The latter sorptive substrate is illustratively calcined powdered clays, diatomaceous earth, calcium silicate, fumed silica and fumed silica which has been made hydrophobic as by the replacement of most of the hydrophilic hydroxyl groups which normally populate the silica surface with trimethylsiloxyl groups. The formulations so-prepared are then agitated by suitable means and sprayed with either one of a group of certain acrylic latices (an aqueous emulsion of an acrylic polymer) or a solution of said acrylic polymer in a solvent, such as tetrahydrofurfuryl alcohol, in amounts sufficient to provide an acrylic polymer coating of, preferably, from about 0.5% to about 5%, by weight, and, more preferably, from about 1.5% to about 4% by weight, of said granular formulations. The latter latices may be selected from hard thermoplastic acrylic emulsion polymers with a solids content ranging from about 38% to about 43% by weight, and having an intrinsic viscosity range of from 0.75 to 3.1 dl/g at 30°C. in THF (tetrahydrofuran), from hard self-crosslinking acrylic emulsion polymers with a solids content of about 45—46% by weight, and having an intrinsic viscosity range of from 1.0 to 2.0 and, preferably, about 1.4 dl/g at 30°C. in dimethylformamide (DMF), and from solutions of acrylic polymers in tetrahydrofurfuryl alcohol, wherein said acrylic polymers have an intrinsic viscosity range of from 0.05 to 0.1 dl/g, and preferably, 0.085 dl/g at 30°C. in butanol. If desired, the above formulations may be heated to accelerate and increase the hardening of said coatings.

It is found that, by utilizing the teaching of the present invention, a number of compositions can be prepared within which it is possible to select one wherein the toxicant is released rapidly into the surrounding environment over a relatively short period of time; or to alternatively select a composition which will release said toxicant slowly over a prolonged period of time. Thus, it is possible to adjust, within certain practical limits, if so desired, the controlled release of toxicant from the novel compositions of the present invention by the selection of suitable formulations.

The coated granular pesticidal compositions also exhibit reduced mammalian dermal toxicity.

The present invention is further illustrated by the following examples in which, unless otherwise stated, the percentages set forth are by weight.

3

Example 1

Preparation of a granular formulation containing 15% by weight of O,O - diethyl S - [[(1,1 - dimethylethyl)ethio]methyl]phosphorodithioate

A. 78.5 gms. of granular (25/50) montmorillonite having the compositions set forth below are charged to a rotating type blender and agitated. While being agitated, the granules are sprayed with a mixture of the insecticide:

O,O - diethyl S - [[(1,1 - dimethylethyl)thio]methyl]phosphorodithioate (17.5 gms. 88.57% real=15.5 g. real) and a deactivator comprising a mixture of ethylene, di, tri- and tetraethylene glycol (4.0 gms.).

After the spraying has been completed, blending is continued until all the liquid is absorbed. There is obtained 100 gms. of a granular formulation containing 15.5% w/w of the above insecticide.

Montmorillonite Analysis

| Component | % by weight, range |
|---|---|
| Silica ($SiO_2$) | 68—72.5 |
| Ferric oxide ($Fe_2O_3$) | 5—7 |
| Aluminum oxide ($Al_2O_3$) | 11—15 |
| Calcium oxide (CaO) | 0.012—1.5 |
| Magnesium oxide (MgO) | 0.8—1.6 |
| Sodium oxide ($Na_2O$) | 0.08—0.4 |
| Potassium oxide ($K_2O$) | 1.1—1.6 |
| Phosphoric acid ($P_2O_5$) | 0.1—0.2 |
| Cr, Cu, Mn, Ni, Ti | trace |
| Ignition loss | 3—7.5 |

B. Following above method, but substituting 78.5 gms. of attapulgite having the analysis set forth below, containing 15.5% w/w of the above insecticide is prepared.

Attapulgite analysis

| Component | % by weight |
|---|---|
| Silica | 64.37 |
| Aluminium | 12.46 |
| Ferric oxide | 5.93 |
| Magnesium oxide | 5.28 |
| Calcium oxide | 0.99 |
| Sodium oxide | 0.05 |
| Potassium oxide | 1.58 |
| Titanium dioxide | 0.73 |
| Loss on ignition | 8.21 |

Example 2

Preparation of acrylic polymer coated granular pesticidal formulations

a. A granular insecticidal formulation (100 g) prepared by the method of Example 1A above is tumbled in a rotating type blender and sprayed with a hard, thermoplastic acrylic emulsion polymer with a solids content of 38% and with an intrinsic viscosity of 3.1 dl/g at 30°C. in THF (10 ml of latex is used). There is obtained 110 g of free-flowing and dry granules containing 14.09%, by weight, of toxicant.

b. A sample of the above formulation is stored at 45°C. for 2 hours.

c. A granular insecticidal formulation (100 g) prepared by the method of Example 1A above is sprayed as above with a mixture of a hard thermoplastic acrylic emulsion polymer, solids content 43%, by weight, and with an intrinsic viscosity of 0.75 dl/g at 30°C. in THF and dibutyl phthalate (6 ml of a 60:40 mixture). There is obtained 106 g. of formulation containing 14.6% by weight of toxicant.

By the methods of a, b and c above, granular formulations are prepared, containing 15.5% by weight, of 20.5% by weight, of O,O - diethyl S - [[(1,1 - dimethylethyl)thio]methyl]phosphorodithioate, respectively.

Example 3

Preparation of acrylic polymer coated granular pesticidal formulations

Procedure

A granular insecticidal formulation (100 g) prepared by the method of Example 1A, above, and a finely divided hydrophobic silica (0.5 g; 0.5%) in which most of the surface hydroxyl groups have been replaced by trimethylsiloxyl groups, are mixed and blended for 5 minutes prior to being sprayed with the respective coatings.

a. A granular formulation (100.5 g) prepared by the above procedure is agitated and sprayed with a hard self-crosslinking acrylic emulsion polymer with a solids content of 45%, by weight, and with an intrinsic viscosity of 1.4 dl/g at 30°C. in DMF (4 ml of latex used for coating). The thus obtained formulation (104.5 g; 14.83% real) is free-flowing, dry, and shows no tendency to form agglomerates;

b. The procedure of a above is followed except that 6 ml. of latex are used to coat the granules (106.5 g; 14.55% real); or

c. A granular formulation (100.5 g) prepared by the above procedure is agitated and sprayed with a hard self-crosslinking acrylic emulsion polymer with a solids content of 45%, by weight, and with an intrinsic viscosity of 1.4 dl/g at 30°C. in DMF (6 ml of latex used for coating). The thus obtained formulation (106.5 g; 14.55% real) is free-flowing dry, and shows the presence of only trace amount of agglomerates.

By the methods of a, b or c above, a granular formulation is prepared which contains 15.5% by weight. or 20.5% by weight of O,O - diethyl S - {[(1,1 - dimethylethyl)thio]methyl}phosphorodithioate, respectively.

Example 4
Preparation of acrylic polymer coated granular pesticidal formulation

Procedure

A granular insecticidal formulation (100 g) prepared by the method of Example 1A, above, and a finely divided hydrophobic silica in which most of the surface hydroxyl groups have been replaced by trimethylsiloxyl groups (1.0 g; 1%) are blended for 5 minutes prior to being sprayed with the respective coatings.

a. A granular formulation (101 g) prepared by the above procedure is tumbled in a rotating type of blender and sprayed with a hard, self-crosslinking acrylic emulsion polymer, with a solids content of 45% by weight, and with an intrinsic viscosity of 1.4 dl/g at 30°C. in DMF (4 ml of latex used). The thus obtained composition (105 g; 14.76% real) is free-flowing, dry, and shows no tendency to form agglomerates.

b. A granular formulation (101 g) prepared by the above procedure is tumbled and sprayed with a hard, self-crosslinking acrylic emulsion polymer with a solids content of 45%, by weight, and with an .intrinsic viscosity of 1.4 dl/g at 30°C. in DMF (6 ml of latex used). The thus obtained composition (107 g; 14.48% real) is free-flowing, dry, and does not form aggregates.

Example 5
Preparation of acrylic polymer coated granular pesticidal formulations

Procedure

There are admixed 100 gms. of a granular insecticidal formulation prepared by the method of Example 1A, above, together with 0.5 gm of a finely divided hydrophobic silica in which most of the surface hydroxyl groups have been replaced by trimethylsiloxyl groups. The admixing takes place within 5 minutes prior to being sprayed with the respective coatings.

a. A granular formulation (100.5 g.) prepared by the above procedure is agitated and sprayed with a hard thermoplastic acrylic emulsion polymer with a solids content of 43% by weight, and with an intrinsic viscosity of 0.75 dl/g at 30°C. In THF (6 ml of latex used). The thus obtained composition (106.5 g; 14.55% real) is dry and forms only a few agglomerates.

b. As under a except that 1.0 g (1%) of the above hydrophobic silica is used in the formulation. The thus-obtained composition (107 g; 14.48% real) is dry and forms no agglomerates.

Example 6
Preparation of a granular formulation containing 20% by weight of O,O - diethyl S - {[(1,1 - dimethylethyl)thio]methyl}phosphorodithioate

Granular (25/50) montmorillonite clay (66.2 g) is agitated in a blender and while being agitated, the granules are sprayed with a mixture of O,O - diethyl S - {[(1,1 - dimethylethyl)thio]methyl}- phosphorodithioate (22.8 g; 90.38% real=20.6 g real) and a deactivator comprising a mixture of ethylene, di-, tri and tetraethylene glycol (4.0 g). After the spraying step has been completed, finely divided hydrophobic silica in which most of the surface hydroxyl groups have been replaced by trimethylsiloxyl groups (1.0 g; 1%) is added and blending is continued for 5 minutes. The thus-obtained blend is tumbled and sprayed with a hard, self-crosslinking acrylic emulsion polymer with a solids content of 45% by weight and with intrinsic viscosity of 1.4 dl/g at 30°C. in DMF (6 ml of latex used). The composition is free-flowing and dry.

Example 7
Preparation of a granular formulation containing 10% by weight of O,O - diethyl S - (ethylthio- methyl)phosphorodithioate

a. Brick chips (79.07 g) are charged to a rotating type blender. While being agitated, the chips are sprayed with the insecticide: O,O - diethyl S - (ethylthiomethyl)phosphorodithioate (11.93 g of 88%

**0 016 278**

real=10.5 g real), and diethylene glycol (5.0 g). Next, the so-treated chips are sprayed with a 37.5% w/w solution of an acrylic polymer in tetrahydrofurfuryl alcohol (4.0 g.) to provide a polymer coating for said chips. The acrylic polymer is characterized by having an intrinsic viscosity of .085 dl/g at 30°C. in butanol. There is obtained 100 g of a granular formulation containing 10% w/w of the above insecticide (with a 5% overage).

The above formulation has an $LD_{50}$ of >200 mg/kg by the method of Example 9, whereas a similar, but uncoated, sample has an $LD_{50}$ of 110 mg/kg.

b. By the method of a, but substituting O,O - diethyl S - {[(1,1 - dimethylethyl)thio]methyl}-phosphorodithioate (10.5 g real) for the above insecticide, a granular formulation can be prepared.

c. The preparation under a is repeated except that the sprayed brick chips are blended for 5 minutes with 0.5% by weight, of a finely divided hydrophobic silica in which most of the surface hydroxyl groups have been replaced by trimethylsiloxyl groups, and the thus prepared blend is then sprayed with a hard thermoplastic acrylic emulsion polymer with a solids content of 38% and with an intrinsic viscosity of 3.1 g dl/g at 30°C. in THF, to provide 1.9%, by weight, of formulation of said polymers.

The thus obtained composition has a dermal $LD_{50}$ of from >120 to <200 mg/kg by the method of Example 9.

The properties of the acrylic resins employed in the above Examples 2a, 2b and 7c, for instance, are further characterized below. The resin, manufactured by the Rohm and Haas Co. is sold under the trademark, Rhoplex® B-85. It has the following typical physical properties:

| | |
|---|---|
| Appearance | White milky liquid |
| Solids | 38.0±0.5 percent |
| pH (as shipped) | 9.5 to 10.0 |
| Weight per gallon | 8.9 lbs. |
| Dry bulking value (gal/lb.) | 0.102 (calculated) |
| Tukon hardness (KHN) | 18 |
| Colloidal charge | Anionic |
| Minimum film-formulation temperature | >90°C |

In Examples 2c, 5a and 5b, above, the acrylic resin is manufactured by Rohm and Haas Co. and is sold under the trademark Rhoplex® B-88. It has the following typical physical properties:

| | |
|---|---|
| Appearance | White milky liquid |
| Solids content | 42 to 43% |
| Viscosity | Less than 100 cps. |
| pH (as shipped) | 8.5 to 9.0 |
| Ionic nature | Nonionic |
| Minimum film-forming temperature | Greater than 90°C. |
| Tukon hardness (approx.) | 18 KHN |

In Examples 3a, 3b and 4a, above, the acrylic resin manufactured by the Union Carbide Co. and is sold under the trademark Ucar® Latex 189. It has the following typical physical properties:

| | |
|---|---|
| Polymer type | Hard, self-crosslinking acrylic |
| Emulsifier | Anionic |
| Total solids | 45% by wt. |
| Viscosity (Brookfield, Model LVT, Spindle No. 2; 60 rpm) | <100cp |
| pH at 25°C | 4.0 |
| Apparent specific gravity at 20/20°C | 1.07 |
| Weight per gallon at 20°C | 8.9 lb |
| Particle size (microns) | 0.3 |
| Surface tension (dynes per cm) | 38 |

In Examples 3c, 4b and 6, above, the acrylic resin is manufactured by the Union Carbide Co. and is sold under the Ucar® Latex 879. It has the following typical physical properties:

| | |
|---|---|
| Total solids, % by weight | 46 |
| Brookfield viscosity (maximum), model LVT, spindle No. 1, 60 rpm, cps | 100 |
| pH at 25°C | 4.5 |
| Apparent specific gravity at 20/20°C | 1.07 |
| Weight per gallon at 20°C | 8.90 |
| Surface tension, dynes per cm at 30% total solids | 50 |

6

In Example 7a and 7b, the acrylic resin is manufactured by the American Cyanamid Co. and is designated as XG4011 Acrylic Resin as having the following typical physical properties:

| | |
|---|---|
| Appearance | Clear, Viscous liquid |
| Solids, % by weight | $75\pm2$ |
| Solids, % by volume | $70\pm2$ |
| Solvent | N-butanol |
| Viscosity, Gardner-Holdt, 25°C | $Z_5Z_7$ |
| Color, Gardner, 1963, maximum | 1 |
| Acid number, (resin solids) | 100—120 |
| Pounds per gallon, approximate | 8.5 |
| Flash point (Tag open cup) | >172°F |
| Intrinsic Viscosity in Butanol at 30°C | .085 |

Example 8

General method for the evaluation of dermal toxicity of the formulations of the present invention using male albino rabbits as the test animals

Materials

a. Five male albino rabbits weighing approximately 2.2 to 3.5 kilogram are selected for each dosage level. The hair is shaved from the entire trunk.

b. Saran tubing or "Vinylite" film VU1900, 30.5 cm (12") wide, 0.04 millimeter in thickness and long enough to fit around the rabbit.

c. One felt cloth bandage measuring approximately 22.9×45.7 cm (9"×18").

d. Four pieces of 3.8 cm (1.5") adhesive tape approximately 35.6 cm (14") long.

Procedure

a. The granular material is placed in the center of the plastic film and is moistened with water.

b. The rabbits underside is moistened with water and the animals are placed belly down on the material.

c. The plastic is then brought up and around the animal and secured at each end with strips of adhesive tape. The felt cloth is then placed under the belly and brought up around the animal and secured to the body with the remaining two strips of adhesive tape.

Evaluation

Twenty-four hours after dosing, the "cuff" is removed and any remaining material is brushed away. If the test material cannot be removed, the animal is fitted with a fiber collar which prevents the animal from licking the treatment area. The animals are observed for 14 days, post dosing, noting signs of toxicity, skin irritation and mortality. At the end of 14 days, the animals are sacrificed and weighed.

From the data thus obtained, the dermal $LD_{50}$ values (mg/kg body weight) are calculated from the formulations (compositions) of Examples 2 to 6, and are summarized in Table I below, along with the $LD_{50}$ value of the toxicant itself and a granular (non-coated) formulation thereof.

TABLE I

Dermal toxicity of coated granular compositions containing O,O - diethyl S - {[(1,1 - dimethylethyl)thio]methyl}phosphorodithioate

| Composition | $LD_{50}$ mg/kg |
|---|---|
| O,O-diethyl S-{[(1,1-dimethylethyl)thio]methyl}-phosphorodithioate (technical) | 1—2 |
| Non-coated, granular; 15% toxicant | <20 |
| Example 2a | >80 |
| Example 2b | >80 |
| Example 2c | <80>40 |
| Example 3a | >80 |
| Example 3b | >80 |
| Example 4a | >80 |
| Example 4b | >80 |
| Example 5a | <80>40 |
| Example 5b | <80<40 |
| Example 6 | <80>40 |

It can be seen from Table I above, that the exemplified coated granular compositions of the present invention are at least two to three-fold less toxic as are the comparable non-coated compositions.

7

Example 9
Southern corn rootworm soil residual test

One quart (950 ml) of moist (about 25% of moisture holding capacity) potting soil is placed in a stainless steel beaker approximately 22 cm deep×18 cm diameter. A weighed amount of granular formulation is distributed over the soil. The beaker is then capped and rotated on a mechanical mixer for 2 minutes (60 revolutions). Two 1-ounce (29.7 ml) jars of soil are removed for 0 days mortality evaluation with southern corn rootworm (*Diabrotica undecipuntata howardi*) larvae. The remainder of the treated soil is divided between 2 wide-mouth pint (475 ml) treated paper containers. Each container of soil received 100 ml of tap water, bringing the soil to near field moisture holding capacity. A regime of moistening and drying continues throughout the test period. The treated soils plus the untreated control are held in the holding room at about 26.7°C. At weekly intervals the duplicate containers of soil are removed, the soil thoroughly mixed, moistened to about 25% moisture holding capacity, and two 1-ounce (29.7 ml) jars of soil are removed for bioassay with southern corn rootworm larvae.

The data obtained are summarized in Table II below.

TABLE II

Evaluation of the soil residual activity of acrylic polymer coated pesticidal granules, containing 15% by weight of O,O - diethyl S - {[(dimethylethyl)thio]methyl}phosphorodithioate against southern corn rootworm larvae.

| Example | Concentration mg. a.i/950 ml** soil | Residual activity (average of two replicates) percent kill, days past start of week | | | | | | |
|---|---|---|---|---|---|---|---|---|
| | | 0 | 7 | 21 | 42* | 70 | 91 | 131 |
| control | — | 0 | 0 | 30 | 5 | 0 | 0 | 0 |
| uncoated | 1 | 50 | 100 | 100 | 100 | 30 | 0 | 0 |
| | 2 | 100 | 100 | 100 | 100 | 100 | 67 | 0 |
| | 4 | 100 | 100 | 100 | 100 | 100 | 100 | 100 |
| 2a | 1 | 100 | 100 | 100 | 100 | 100 | 44 | 0 |
| | 2 | 100 | 100 | 100 | 100 | 100 | 78 | 0 |
| | 4 | 100 | 100 | 100 | 100 | 100 | 100 | 50 |
| 3a | 1 | 20 | 100 | 100 | 95 | 10 | 0 | 0 |
| | 2 | 90 | 100 | 100 | 100 | 90 | 44 | 0 |
| | 4 | 100 | 100 | 100 | 100 | 100 | 100 | 17 |
| 3b | 1 | 50 | 100 | 100 | 100 | 100 | 67 | 0 |
| | 2 | 70 | 100 | 100 | 100 | 100 | 100 | 0 |
| | 4 | 80 | 100 | 100 | 100 | 100 | 100 | 83 |
| 3c | 1 | 85 | 100 | 100 | 100 | 100 | 11 | 0 |
| | 2 | 80 | 100 | 100 | 100 | 100 | 78 | 0 |
| | 4 | 100 | 100 | 100 | 100 | 100 | 100 | 100 |
| 4a | 1 | 85 | 100 | 100 | 100 | 90 | 0 | 0 |
| | 2 | 100 | 100 | 100 | 100 | 100 | 56 | 0 |
| | 4 | 100 | 100 | 100 | 100 | 100 | 100 | 83 |
| 4b | 1 | 100 | 100 | 100 | 100 | 70 | 0 | 0 |
| | 2 | 100 | 100 | 100 | 100 | 100 | 67 | 0 |
| | 4 | 100 | 100 | 100 | 100 | 100 | 100 | 83 |
| 5a | 1 | 45 | 100 | 100 | 100 | 40 | 22 | 0 |
| | 2 | 75 | 100 | 100 | 100 | 70 | 11 | 0 |
| | 4 | 100 | 100 | 100 | 100 | 100 | 100 | 50 |

*After this day only single tests are run
**Corresponds to 1.12, 2.24 and 4.48 kg/ha, respectively

Advantageously, from the biological data presented in Table II above, it can be seen that certain of the coated granular formulations may be utilized to provide short term controlled release of toxicant, especially at the lower rates applied (e.g. 3a, 4b and 5a; at 1 mg. a.i., 6 to 10 weeks); while others provide long term controlled release of toxicant, especially at the higher rates applied (e.g. 3b, 3c, 4a and 4b; at 4 mg. a.i., 13—19 weeks).

## Claims

1. A solid particulate composition comprising particles of an inert sorptive or non-sorptive carrier impregnated or coated with a phosphorus pesticide, characterized in that the pesticide-impregnated or -coated carrier is coated with an acrylic polymer selected from the group consisting of a (1) hard, thermoplastic acrylic polymer having an intrinsic viscosity of from 0.75 dl/g to 3.1 dl/g at 30°C in tetrahydrofuran, (2) hard, self-crosslinking thermoplastic acrylic polymers having an intrinsic viscosity of from 1.0 dl/g to 2.0 dl/g at 30°C in dimethylformamide and (3) acrylic polymers having an intrinsic viscosity of from 0.05 dl/g to 0.1 dl/g at 30°C in butanol.

2. A composition according to Claim 1, wherein said pesticide-impregnated or -coated carrier is also coated and/or blended with a finely divided sorptive substrate.

3. A composition according to Claim 1 or Claim 2, characterized in that said carrier is selected from the group consisting of attapulgite and montmorillonite clays, brick chips, pumice, talc, volcanic cinders, corncob grits, sand and limestone chips, and is employed in amounts ranging from 62% to 94% by weight, of the overall composition; and when a sorptive carrier is employed, a deactivator selected from the group consisting of ethylene glycol, di-, tri- and tetraethylene glycol and mixtures thereof is incorporated in said composition in amounts ranging from 3% to 6% by weight, of total composition to neutralize the intrinsic acidity of said carrier, provided that the percent by weight amount is lowered with an amount equal to that of the deactivator employed; said pesticide is selected from the group consisting of 2 - (diethoxyphosphinylimino) - 1,3 - dithiolane, 2 - (diethoxyphosphinylimino) - 4 - methyl - 1,3 - dithiolane, 2 - (diethoxyphosphinylimino) - 1,3 - dithietane, O,O - diethyl S - (ethylthiomethyl) - phosphorodithioate and O,O - diethyl S - {[(1,1 - dimethylethyl)thio]methyl}-phosphorodithioate, and is employed in amounts ranging from 2% to 25%, by weight, of the composition; said sorptive substrate when employed, is selected from the class consisting of a calcined clay, diatomaceous earth, calcium silicate, fumed silica and fumed silica which has been made hydrophobic via replacement of most of the hydrophilic hydroxyl groups by populating the surface of said silica with trimethylsiloxyl groups, and is employed in amounts ranging from 0.5% to 2%, by weight, of the total composition; and said acrylic polymer is selected from the group consisting of a hard, thermoplastic acrylic polymer having an intrinsic viscosity range of from 0.75 dl/g to 3.0 dl/g at 30°C in tetrahydrofuran, hard, self-crosslinking thermoplastic acrylic polymers having an intrinsic viscosity ranging from 1.0 dl/g to 2.0 dl/g at 30°C in dimethylformamide and acrylic polymers having an intrinsic viscosity ranging from 0.05 dl/g to 0.1 dl/g at 30°C in butanol and is employed in amounts ranging from 0.5% to 5%, by weight, of the total composition.

4. A composition according to Claim 1 or Claim 2, comprising 71.36%, by weight, of montmorillonite clay; 15.91% by weight of 88.57% real O,O - diethyl S - {[(1,1 - dimethylethyl)thio]-methyl}phosphorodithioate; 3.63% by weight, of ethylene di-, tri- and tetraethylene glycol deactivator mixture; coated with 9.1%, by weight, of the total composition of a hard, thermoplastic acrylic polymer latex having a solids content of 43% by weight and an intrinsic viscosity ranging from 0.75 dl/g to 3.1 dl/g at 30°C in tetrahydrofuran.

5. A composition according to Claim 2, comprising 75—77%, by weight, of montmorillonite clay; 17.5% by weight of 88.57% real O,O - diethyl S - {[(1,1 - dimethylethyl)thio]methyl}phosphorodithioate; 4.0% by weight, of an ethylene di-, tri- and tetraethylene glycol deactivator mixture; 0.5% by weight, of fumed silica made hydrophobic via replacement of most of the hydrophilic hydroxyl groups populating the surface of said silica with trimethylsiloxyl groups; coated with 1%, by weight, to 3% by weight of the total composition of a hard thermoplastic selfcrosslinking acrylic polymer latex having a solids content of 45% by weight and an intrinsic viscosity of 1.4 dl/g at 30°C in dimethylformamide.

6. A composition according to Claim 1, comprising 71.36%, by weight, of attapulgite clay; 15.91% by weight, of 88.57% real O,O - diethyl S - {[(1,1 - dimethylethyl)thio]methyl}phosphorodithioate; 3.63% by weight, of a di- and triethylene glycol deactivator mixture; coated with 9.1% by weight, of the total composition of a hard thermoplastic acrylic polymer latex having a solids content of 43% by weight and an intrinsic viscosity of from 0.75 dl/g to 3.1 dl/g at 30°C in tetrahydrofuran.

7. A composition according to Claim 2, comprising 75—77%, by weight, of attapulgite clay; 17.5% by weight, of 88.57% real O,O - diethyl S - {[(1,1 - dimethylethyl)thio]methyl}phosphorodithioate; 4.0% by weight of a di- and triethylene glycol deactivator mixture; 0.5% by weight to 1.0% by weight, of a fumed silica made hydrophobic via replacement of most of the hydrophilic hydroxyl groups populating the surface of said silica with trimethylsiloxyl groups; coated with 1% by weight, to 3% by weight, of the total composition of a hard thermoplastic self-crosslinking acrylic polymer latex having a solids content of 45% by weight and an intrinsic viscosity of 1.4 dl/g at 30°C in dimethylformamide.

8. A composition according to Claim 1, comprising 79.07% by weight, of brick chips, 11.93% by weight, of 88% real O,O - diethyl S - (ethylthiomethyl)phosphorodithioate, 5%, by weight, of diethylene glycol deactivator mixture; coated with 4% by weight, of a 37.5% solution of an acrylic polymer in tetrahydrofurfuryl alcohol; wherein said acrylic polymer has an intrinsic viscosity of .085 dl/g at 30°C in butanol.

9. A method for controlling the rate of toxicant release of a phosphorus pesticide-containing particulate composition; comprising applying to said composition, in amounts ranging from 0.5% to 5%, by weight, of the total composition, an acrylic polymer selected from the group consisting of (1) hard thermoplastic acrylic polymers having an intrinsic viscosity of from 0.75 dl/g to 3.0 dl/g at 30°C in tetrahydrofuran, (2) hard self-crosslinking thermoplastic acrylic polymers having an intrinsic viscosity of from 1.0 dl/g to 2.0 dl/g at 30°C in dimethylformamide and (3) acrylic polymers having an intrinsic viscosity of from 0.05 dl/g to 0.1 dl/g at 30°C in butanol; wherein said solid particulate composition comprises particles of an inert, coarse or finely divided, sorptive or non-sorptive carrier impregnated or coated with said phosphorus pesticide.

10. A method according to Claim 9, wherein said phosphorus pesticide-impregnated or -coated carrier is also blended and/or coated with a finely divided sorptive substrate.


**Patentansprüche**

1. Feste, teilchenförmige Masse mit Teilchen aus einem inerten, absorbierenden oder nicht-absorbierenden Trägermaterial, welches imprägniert oder beschichtet ist mit einem phosphorhaltigen Schädlingsbekämpfungsmittel, dadurch gekennzeichnet, daß das mit dem Schädlingsbekämpfungsmittel imprägnierte oder beschichtete Trägermaterial mit einem Acrylpolymeren beschichtet ist, das ausgewählt ist aus der Gruppe, bestehend aus (1) harten, thermoplastischen Acrylpolymeren mit einer Intrinsic-Viskosität von 0,75 dl/g bis 3,1 dl/g bei 30°C in Tetrahydrofuran; (2) harten, selbstvernetzenden, thermoplastischen Acrypolymeren mit einer Intrinsic-Viskosität von 1,0 dl/g bis 2,0 dl/g bei 30°C in Dimethylformamid; und (3) Acrylpolymeren mit einer Intrinsic-Viskosität von 0,05 dl/g bis 0,1 dl/g bei 30°C in Butanol.

2. Masse nach Anspruch 1, dadurch gekennzeichnet, daß das mit dem Schädlingsbekämpfungsmittel imprägnierte oder beschichtete Trägermaterial zusätzlich mit einem feinverteilten, absorbierenden Substrat beschichtet und/oder vermischt ist.

3. Masse nach einem der Ansprüche 1 oder 2, dadurch gekennzeichnet, daß das Trägermaterial ausgewählt ist aus der Gruppe, bestehend aus Attapulgitton, Montmorillonitton, Zeigelmehl, Bimssteinmehl, Talkum, vulkanischer Asche, Maiskolbenmehl, Sand und Kalksteinmehl, und daß das Trägermaterial in Mengen von 62 bis 94 Gew.%, bezogen auf die Gesamtmasse, vorliegt und daß im Falle der Anwendung eines absorbierenden Trägermaterials ein Desaktivator, ausgewählt aus der Gruppe, bestehend aus Äthylenglykol, Di-, Tri- und Tetraäthylenglykol und Mischungen derselben, der Masse in Mengen von 3 bis 6 Gew.%, bezogen auf die Gesamtmasse, einverleibt wird, um die intrinsische Azidität des Trägermaterials zu neutralisieren, wobei die übrigen Gewichtsprozent-Angaben um einen der Menge des zugesetzten Desaktivators entsprechenden Betrag verringert sind, wobei das Schädlingsbekämpfungsmittel ausgewählt ist aus der Gruppe, bestehend aus 2 - (Diäthoxyphosphinylimino) - 1,3 - dithiolan, 3 - (Diäthoxyphosphinylimino) - 4 - methyl - 1,3 - dithiolan, 2 - (Di-äthoxyphosphinylimino) - 1,3 - dithieran, O,O - Diäthyl - S - (äthylthiomethyl)phosphordithioat und O,O - Diäthyl - S - [(1,1 - dimethyläthyl)thio] - methyl - phosphordithiat, und in Mengen von 2 bis 25 Gew.%, bezogen auf die Gesamtmasse, vorliegt; und daß das absorbierende Substrat, falls zugegen, ausgewählt ist aus der Klasse, bestehend aus calciniertem Ton, Diatomeenerde, Calciumsilikat, Aerosil und Aerosil, welches hydrophob gemacht wurde durch Austausch der meisten der die Oberfläche besetzenden, hydrophilen Hydroxylgruppen durch Trimethylsiloxy-Gruppen, wobei das absorbierende Substrat in Mengen von 0,5 bis 2 Gew.%, bezogen auf die Gesamtmasse, vorliegt, und daß das Acrylpolymere ausgewählt ist aus der Gruppe, bestehend aus (1) harten, thermoplastischen Acrylpolymeren mit einer Intrinsic-Viskosität im Bereich von 0,75 dl/g bis 3,0 dl/g bei 30°C in Tetrahydrofuran; (2) harten, selbstvernetzenden, thermoplastischen Acrylpolymeren mit einer Intrinsic-Viskosität im Bereich von 1,0 dl/g bis 2,0 dl/g bei 30°C in Dimethylformamid; und (3) Acrylpolymeren mit einer Intrinsic-Viskosität im Bereich von 0,5 dl/g bis 0,1 dl/g bei 30°C in Butanol, wobei das Acrylpolymere in Mengen vorliegt, welche im Bereich von 0,5 bis 5 Gew.%, bezogen auf die Gesamtmasse, liegen.

4. Masse nach einem der Ansprüche 1 oder 2, gekennzeichnet durch 71,36 Gew.% Montmorillonitton; 15,91 Gew.% von 88,57%igem O,O - Diäthyl - {[(1,1 - dimethyläthyl) - thio] - methyl} - phos-phordithioat; 3,63 Gew.%Äthylen- und Di-, Tri- und Tetraäthylenglykol-Desaktivatorgemisches; durch eine Beschichtung mit 9,1 Gew.%, bezogen auf die Gesamtmasse, eines harten, thermoplastischen Acrylpolymerlatex mit einem Festoffgehalt von 43 Gew.% und einer Intrinsic-Viskosität im Bereich von 0,75 dl/g bis 3,1 dl/g bei 30°C in Tetrahydrofuran.

5. Masse nach Anspruch 2, gekennzeichnet durch 75 bis 77 Gew.% Montmorillonitton; 17,5 Gew.% eines 88,57%igen O,O - Diäthyl - S - {[(1,1 - dimethyläthyl) - thio] - methyl} - phosphordithioats; 4,0 Gew.% eines Äthylen-Di-, Tri- und Tetraäthylenglykol-Desaktivatorgemisches; 0,5 Gew.% Aerosil, welches hydrophob gemacht wurde durch Austausch der meisten die Oberfläche des Aerosils besetzenden hydrophilen Hydroxylgruppen durch Trimethylsiloxy-Gruppen; und durch eine Beschichtung mit 1 bis 3 Gew.%, bezogen aud die Gesamtmasse, eines harten, thermoplastischen, selbstvernetzenden Acrylpolymerlatex mit einem Feststoffgehalt von 45 Gew.% und einer Intrinsic-Viskosität von 1,4 dl/g bei 30°C in Dimethylformamid.

6. Masse nach Anspruch 1, gekennzeichnet durch 71,36 Gew.% Attapulgitton; 15,91 Gew.% eines 88,57%igen O,O - Diäthyl - S - {[(1,1 - dimethyläthyl) - thio] - methyl} - phosphordithoats; 3,63 Gew.% eines Di- und Triäthylenglykol-Desaktivatorgemisches; und eine Beschichtung mit 9,1 Gew.%, bezogen auf die Gesamtmasse, eines harten, thermoplastischen Acrylpolymerlatex mit einem Feststoffgehalt von 43 Gew.% und einer Intrinsic-Viskosität von 0,75 dl/g bis 3,1 dl/g bei 30°C in Tetrahydrofuran.

7. Masse nach Anspruch 2, gekennzeichnet durch 75 bis 77 Gew.% Attapulgitton; 17,5 Gew.% eines 88,57%igen O,O - Diäthyl - S - {[(1,1 - dimethyläthyl) - thio] - methyl} - phosphordithioats; 4,0 Gew.% eines Di- und Triäthylenglykol-Desaktivatorgemisches; 0,5 Gew.% bis 1,0 Gew.% Aerosil, welches hydrophob gemacht wurde durch Austausch der meisten der die Oberfläche besetzenden, hydrophilen Hydroxylgruppen durch Trimethylsiloxy-Gruppen; und eine Beschichtung mit 1 bis 3 Gew.%, bezogen auf die Gesamtmasse, eines harten, thermoplastischen, selbstvernetzenden Acrylpolymerlatex mit einen Feststoffgehalt von 45 Gew.% und einer Intrinsic-Viskosität von 1,4 dl/g bei 30°C in Dimethylformamid.

8. Masse nach Anspruch 1, gekennzeichnet durch 79,07 Gew.% Ziegelmehl; 11,93 Gew.% eines 88%igen O,O - Diäthyl - S - (äthylthiomethyl) - phosphordithioats; 5 Gew.% eines O,O - Diäthylen-glykol - Desaktivatorgemisches; beschichtet mit 4 Gew.% einer 37,5%igen Lösung eines Acrylpolymeren in Tetrahydrofurfurylalkohol, wobei das Acrylpolymere eine Intrinsic-Viskosität von 0,085 dl/g bei 30°C in Butanol aufweist.

9. Verfahren zur Steuerung der Geschwindigkeit der Freisetzung eines phosphorhaltigen Schädlingsbekämpfungsmittels, welches in einer teilchenförmigen Masse enthalten ist, dadurch gekennzeichnet, daß man auf die Masse 0,5 bis 5 Gew.%, bezogen auf die Gesamtmasse, eines Acrylpolymeren aufbringt, welches ausgewählt ist aus der Gruppe, bestehend aus (1) harten, thermoplastischen Acrylpolymeren mit einer Intrinsic-Viskosität von 0,75 dl/g bis 3,0 dl/g bei 30°C in Tetrahydrofuran; (2) harten, selbstvernetzenden, thermoplastischen Acrylpolymeren mit einer Intrinsic-Viskosität von 1,0 dl/g bis 2,0 dl/g bei 30°C in Dimethylformamid; und (3) Acrylpolymeren mit einer Intrinsic-Viskosität von 0,05 dl/g 0,1 dl/g bei 30°C in Butanol, wobei die feste, teilchenförmige Masse Teilchen eines inerten, groben oder feinverteilten, absorbierenden oder nicht-absorbierenden Trägermaterials umfaßt, das mit dem phosphorhaltigen Schädlingsbekämpfungsmittel imprägniert oder beschichtet ist.

10. Verfahren nach Anspruch 9, dadurch gekennzeichnet, daß das mit dem phosphorhaltigen Schädlingsbekämpfungsmittel imprägnierte oder beschichtete Trägermaterial mit einem feinverteilten, absorbierenden Substrat vermischt und/oder beschichtet ist.

## Revendications

1. Composition en particules solides comprenant des particules d'un support inerte sorbant ou non sorbant imprégné ou revêtu d'un pesticide phosphoré, caractérisée en ce que le support imprégné ou revêtu de pesticide est revêtu d'un polymère acrylique choisi parmi le groupe constitué par (1) un polymère acrylique thermoplastique dur ayant une viscosité intrinsèque de 0,75 dl/g à 3,1 dl/g à 30°C dans le tétrahydrofuranne, (2) les polymères acryliques thermoplastiques autoréticulables durs ayant une viscosité intrinsèque de 1,0 dl/g à 2,0 dl/g à 30°C dans le diméthylformamide et (3) les polymères acryliques ayant une viscosité intrinsèque de 0,05 dl/g à 0,1 dl/g à 30°C dans le butanol.

2. Composition selon la revendication 1, dans laquelle ledit support imprégné ou revêtu de pesticide est également revêtu et/ou mélangé avec un substrat sorbant finement divisé.

3. Composition selon l'une des revendications 1 ou 2, caractérisée en ce que ledit support est choisi parmi le groupe constitué par les argiles attapulgite et montmorillonite, les fragments de brique, la pierre ponce, le talc, les cendres volcaniques, le gruau d'épis de maïs, le sable et les fragments de calcaire et est employé en des quantités comprises entre 62 % et 94 % du poids total de la composition; et, lorsqu'on emploie un support sorbant, un désactivateur, choisi parmi le groupe constitué par l'éthylèneglycol, le di-, tri- et tétraéthylèneglycol et leurs mélanges, est incorporé à ladite composition en des quantités comprises entre 3 et 6 % du poids total de la composition pour neutraliser l'acidité intrinsèque dudit support, sous réserve que le pour centage pondéral soit réduit d'une quantité égale à celle du désactivateur employé; ledit pesticide est choisi parmi le groupe constitué par le 2 - (diéthoxyphosphinylimino) - 1,3 - dithiolanne, le 2 - (diéthoxyphosphinylimino) - 4 - méthyl - 1,3 - dithiolanne, le 2 - (diéthoxyphosphinylimino) - 1,3 - dithiétanne, le S - (éthylthiométhyl) - phosphorodithioate d'O,O - diéthyle et le S - {[(1,1 - diméthyléthyl)thio]-méthyl} - phosphorodithioate d'O,O - diéthyle et est employé en des quantités comprises entre 2 % et 25 % du poids de la composition; ledit substrat sorbant, lorsqu'on l'utilise, est choisi parmi la catégorie constituée par une argile calcinée, la terre de diatomées, le silicate de calcium, la silice fumée et la silice fumée que l'on a rendue hydrophobe par remplacement de la majeure partie des groupes hydroxy

11

**0 016 278**

hydrophiles peuplant la surface de ladite silice par des groupes triméthylsiloxy, et est utilisé en des quantités comprises entre 0,5 % et 2 % du poids de la composition totale; et ledit polymère acrylique est choisi parmi le groupe constitué d'un polymère acrylique thermoplastique dur ayant une viscosité intrinsèque comprise dans la gamme de 0,75 dl/g à 3,0 dl/g à 30°C dans le tétrahydrofuranne, les polymères acryliques thermoplastiques autoréticulables durs ayant une viscosité intrinsèque comprise entre 1,0 dl/g et 2,0 dl/g à 30°C dans le diméthylformamide et les polymères acryliques ayant une viscosité intrinsèque comprise dans la gamme de 0,5 dl/g à 0,1 dl/g à 30°C dans le butanol, et est employé en des quantités comprises entre 0,5 % et 5 % du poids de la composition totale.

4. Composition selon l'une des revendications 1 ou 2, comprenant 71,36 % en poids d'argile montmorillonite: 15,91 % en poids de S - {[(1,1 - diméthyléthyl)thio]méthyl}phosphorodithioate d'O,O - diéthyle à 88,57 % de produit proprement dit; et 3,63 % en poids d'un mélange désactivateur constitué d'éthylène glycol et de di-, tri- et tétraéthylèneglycol; revêtue de 9,1 % en poids par rapport à la composition totale d'un latex de polymère acrylique thermoplastique dur ayant une teneur en matières solides de 43 % en poids et une viscosité intrinsèque comprise entre 0,75 dl/g et 3,1 dl/g à 30°C dans le tétrahydrofuranne.

5. Composition selon la revendication 2, comprenant 75 à 77 % en poids d'argile montmorillonite; 17,5 % en poids de S - {[(1,1 - diméthyléthyl)thio]méthyl}phosphorodithioate d'O,O - diéthyle à 88,57 % de produit proprement dit; 4,0 % en poids d'un mélange désactivateur d'éthylène glycol et de di-, tri- et tétraéthylèneglycol; 0,5 % en poids de silice fumée rendue hydrophobe par remplacement de la majeure partie des groupes hydroxy hydrophiles peuplant la surface de ladite silice par des groupes triméthylsiloxy; revêtue de 1 % en poids à 3 % en poids par rapport à la totalité de la composition, d'un latex de polymère acrylique autoréticulable thermoplastique dur ayant une teneur en matières solides de 45 % en poids et une viscosité intrinsèque de 1,4 dl/g à 30°C dans le diméthylformamide.

6. Composition selon la revendication 1 comprenant 71,36 % en poids d'argile attapulgite: 15,91 % en poids de S - {[(1,1 - diméthyléthyl)thio]méthyl}phosphorodithioate d'O,O - diéthyle; 3,63 % en poids d'un mélange désactivateur de di- et triéthylèneglycol; revêtue de 9,1 % en poids par rapport à la totalité de la composition d'un latex de polymère acrylique thermoplastique dur ayant une teneur en matières solides de 43% en poids et une viscosité intrinsèque de 0,75 dl/g à 3,1 dl/g à 30°C dans le tétrahydrofuranne.

7. Composition selon la revendication 2, comprenant 75 à 77 % en poids d'argile attapulgite; 17,5 % en poids de S - {[(1,1 - diméthyléthyl)thio]méthyl}phosphorodithioate d'O,O - diéthyle; 4,0 % en poids d'un mélange désactivateur de di- et triéthylèneglycol; 0,5 % en poids de 1,0 % en poids de silice fumée rendue hydrophobe par remplacement de la majeure partie des groupes hydroxy hydrophiles peuplant la surface de ladite silice par des groupes triméthylsiloxy; revêtue de 1 % en poids à 3 % en poids par rapport à la totalité de la composition d'un latex de polymère acrylique autoréticulable thermoplastique dur ayant une teneur en matières solides de 45 % en poids et une viscosité intrinsèque de 1,4 dl/g à 30°C dans le diméthylformamide.

8. Composition selon la revendication 1, comprenant 79,07% en poids de fragments de brique, 11,93 % en poids de S - (éthylthiométhyl)phosphorodithioate d'O,O - diéthyle à 88% de produit proprement dit, 5 % en poids d'un mélange désactivateur de diéthylèneglycol; revêtue de 4 % en poids d'une solution à 37,5 % d'un polymère acrylique dans l'alcool tétrahydrofurfurylique; dans laquelle ledit polymère acrylique a une viscosité intrinsèque de 0,085 dl/g à 30°C dans le butanol.

9. Procédé pour ajuster la vitesse de libération du toxique d'une composition en particules contenant un pesticide phosphoré; comprenant l'application de ladite composition, en des quantités comprises entre 0,5 % et 5 % du poids total de la composition, d'un polymère acrylique choisi parmi le groupe constitué par (1) les polymères acryliques thermoplastiques durs ayant une viscosité intrinsèque de 0,75 dl/g à 3,0 dl/g à 30°C dans le tétrahydrofuranne, (2) les polymères acryliques thermoplastiques autoréticulables durs ayant une viscosité intrinsèque de 1,0 dl/g à 2,0 dl/g à 30°C dans le diméthylformamide et (3) les polymères acryliques ayant une viscosité intrinsèque de 0,05 dl/g à 0,1 dl/g 30°C dans le butanol; dans lequel ladite composition en particules solides comprend des particules d'un support sorbant ou non sorbant, inerte, grossier ou finement divisé, imprégné ou revêtu dudit pesticide phosphoré.

10. Procédé selon la revendication 9, dans lequel ledit support imprégné ou revêtu de pesticide phosphoré est également mélangé et/ou revêtu d'un substrat sorbant finement divisé.